# EUROPEAN PATENT APPLICATION

(11) **EP 4 699 844 A1**
(43) Date of publication of application: **25.02.2026**
(21) Application number: 24196279.4
(22) Date of filing: 23.08.2024
(51) Int. Cl.: B60K 35/10, B60K 35/25, B60K 35/21

(54) **INPUT DEVICE OF OR FOR A VEHICLE FOR INPUTTING COMMANDS FOR TRIGGERING VEHICLE RE-LATED FUNCTIONS AND VEHICLE COMPRISING SUCH AN INPUT DEVICE**

(71) Applicant: HELLA GmbH & Co. KGaA, 59552 Lippstadt (DE)
(72) Inventor: Allouis, David, 49186 Bad Iburg (DE); Heitzmann, Florian, 79669 Zell i.W. (DE); Lützelschwab, Simon, 79618 Rheinfelden (DE); Heiko, Schöne, 79669 Zell im Wiesental (DE); Frank, Vogt, 33165 Lichtenau (DE)
(74) Representative: Behr-Wenning, Gregor

(57) **Abstract**

The present invention relates to an input device (101, 102) of or for a vehicle (12) for inputting commands for triggering vehicle related functions, comprising a housing (14) enclosing a cavity (16), a vibration generating unit (26) arranged in the cavity (16), the vibration generating unit (26) comprising an exciter (28) for generating vibrations or impulses, a decoupling unit (56) by which the vibration generating unit (26) is fastened to the housing (14), the decoupling unit (56) being designed for decoupling the vibrations from the housing (14), an input panel (50) for inputting commands for triggering vehicle related functions by touching the input panel (50), wherein the vibration generating unit (26) is activated upon touching the input panel (50), the input panel (50) is supported in the input device (101, 102) such that the vibrations generated by the vibration generating unit (26) are transferred to the input panel (50), thereby providing haptic feedback, and at least one light guide (34) arranged in the cavity (16) for guiding light generated by a light source (20) to the input panel (50) for illuminating the same. Moreover, the present invention is drawn to a vehicle (12) comprising such an input device (101, 102).

## Description

The present invention relates to an input device of or for a vehicle for inputting commands for triggering vehicle related functions. Moreover, the present invention is drawn to a vehicle comprising such an input device.

### PRIOR ART

Modern vehicles are equipped with an increasing number of functions that are activatable by the vehicle passengers upon pressing a certain button or a functional surface. Commonly known examples of such functions are the opening and closing of windows and sunroofs and turning on and off reading lamps.

To facilitate the locating of the buttons in the dark, the buttons are backlit and provided with symbols indicating the function that is triggered by pressing the respective button. A current trend is that the buttons are provided with haptic feedback indicating the passenger in a haptic way that a given button was correctly pressed. Whether or not the button has been correctly pressed may be defined by force exerted on the button. For this purpose, vibrations and/or impulses are generated by an exciter and introduced into the button when the button has been correctly pressed. In the following, the invention is explained with reference to vibrations but largely works in the same way when impulses instead of vibrations are generated by the exciter.

Not only for manufacturing reasons but also for the comfort of the passengers a group of buttons is integrated into an input panel of one single operating unit. One example is that the buttons for the reading lamps and the buttons for opening the sunroof are integrated into one operating unit arranged in the overhead console of a vehicle.

In many cases one or more functions are optional features which may or may not be ordered when purchasing of the vehicle. Sunroofs are a typical example of optional features. When the vehicle is equipped with a sunroof, the respective button is needed and vice versa. In operating units known from the prior art, each button is associated with its own light source which depending on the configuration of the vehicle may or may not be needed. This situation imposes a certain complexity in the manufacturing process, thereby increasing the production costs of the operating units.

It is one task of one embodiment of the present invention to present an input device by which the drawbacks previously mentioned can at least be minimized. In particular, the input device should be produceable with a lesser complexity and should flexibly be adjustable to the different configurations of the vehicle.

Furthermore, an embodiment of the present invention has the object to provide a vehicle that can be equipped with such an input device.

The task is solved by the features specified in claims 1 and 15. Advantageous embodiments are the subject of the dependent claims.

According to one aspect of the present invention an input device of or for a vehicle for inputting commands for triggering vehicle related functions, comprises
- a housing enclosing a cavity,
- a vibration generating unit arranged in the cavity, the vibration generating unit comprising an exciter for generating vibrations or impulses,
- a decoupling unit by which the vibration generating unit is fastened to the housing, the decoupling unit being designed for decoupling the vibrations from the housing,
- an input panel for inputting commands for triggering vehicle related functions by touching the input panel, wherein
   ∘ the vibration generating unit is activated upon touching the input panel,
   ∘ the input panel is supported to the housing such that the vibrations generated by the vibration generating unit are transferred to the input panel, thereby providing haptic feedback, and
- at least one light guide arranged in the cavity for guiding light generated by a light source to the input panel for illuminating the same.

The input panel can be illuminated and at the same time provided with haptic feedback. The use of the light guide offers the advantage that the light source can be arranged remote from the input device such that no space is needed for the light source. Consequently, the vibration generating unit can be arranged with a higher degree of freedom within the input device, thereby improving the transmission of the vibrations to the entire input panel. The input device may also be more compact compared to input devices known from the prior art such that resources and constructional space are saved.

Moreover, the number of light sources needed for illuminating the input panel is independent from the number and position of buttons or areas to be illuminated. Only the light guide may have to be adjusted to the number and position of the buttons or areas to be illuminated. Only the correspondingly configured light guide needs to be mounted while the remaining production steps remain unchanged. The production of the input device is facilitated.

The feature that the vibration generating unit is fastened to the housing by the decoupling unit does not mean that the vibration generating unit needs to be directly fastened to the housing by the decoupling unit. Depending on the setup of the input device, intermediate parts such as the input panel and/or the light guide may be arranged between the housing and the vibration generating unit.

According to another embodiment the light source is fastened to the housing. As previously mentioned, due to the use of the light guide, the light source may be arranged remote from the input device. However, in particular from a manufacturing perspective it may be beneficial to include the light source into the input device. Upon mounting, the input device only has to be fastened to the vehicle body or the respective trim components and the connection to the power supply has to be established.

In a further embodiment the input device comprises a printed circuit board on which the light source is arranged, the printed circuit board being fastened to the housing. The use of a printed circuit board has among others the advantage that it is space saving. The input device can thus be provided with a compact design.

In another embodiment the light guide comprises one or more inserting units for coupling light into the light guide, and the light source comprises one or more light-emitting diodes adjacently arranged to the inserting units and arranged on the printed circuit board. LEDs are compact and energy saving electronical components. When for example RGB-LEDs are used the light emitted by the light source can be provided with different colors depending on the gamut of the RGB-LEDs. The inserting units of the light guide are adjacently arranged to the LEDs such that almost no emitted light gets lost. The input panel can thus be illuminated with a high brightness.

A further embodiment defines that the light guide has a first section and a second section, the first section running parallel to the input panel or following the form of the input panel and the second section running perpendicular to the first section, wherein several exiting units are arranged on the first section in which the light can exit the light guide. The term "following the form of the input panel" can be understood such that the distance between the first section of the light guide and the input panel stays constant irrespective of the course of the input panel. The exiting units may comprise scratches or recesses which have the effect that a large amount of light exits the light guide at the exiting units. It may also be possible to design the light guide such that the light exits the light guide at the exiting units only. The input panel can be illuminated with a high brightness in locations where the light is needed, for example where the buttons or the symbols indicating the function of the associated buttons are positioned. When the number and/or position of the buttons and thus the symbols are changed, for example depending on the configuration of the vehicle, only the number and position of the exiting units have to be adjusted accordingly. The remaining setup of the input device can largely be kept unchanged.

According to another embodiment the first section and the second section are arranged in an L-formation, wherein the inserting units are located on the free end of the second section. The first section can be arranged underneath the input panel while the second section can be arranged on the margins of the cavity enclosed by the housing. Using an L-formation leads to an efficient use of the available constructional space inside the input device.

According to another embodiment the input device comprises a reflector for distributing the vibrations generated by the exciter within the input device. The exciter transfers its vibrations within a relatively small area. It may be possible to directly transmit the vibrations from the exciter to the input panel. However, the distribution of the vibrations may not be homogenous. With increasing distance from the contact area of the input panel and the exciter, the vibrations may attenuate. The design and the material of the reflector, however, is chosen such that a homogenous distribution of the vibrations within the input device is obtained at small attenuation. A direct contact between the input panel and the exciter is not necessary.

In a further embodiment the reflector comprises a contact section in which the reflector is contacting the exciter, wherein the exciter and the contact section are arranged in or near the center of the input device. The arrangement of the exciter and the contact section between the exciter and the reflector leads to a very homogenous distribution of the vibrations within the input device. The closer to the center the arrangement of the exciter and the contact section, the more homogeneous is the distribution of the vibrations.

In another embodiment the reflector has a support section for receiving the light guide. In this embodiment, the reflector serves for supporting the light guide inside the input device and thus fulfils a further function next to the distribution of the vibrations. Additional support components for the light guide are not needed, thereby reducing the number of parts of the input device.

A further embodiment defines that the support section of the reflector is configured for receiving the first section, wherein the reflector has a passage opening for the second section. In this embodiment, the light guide of the L-formation can be used and supported by the reflector in a space-saving manner. The reflector and the light guide can thus be tightly connected to each other so that the light guide follows the vibrating movement of the reflector.

According to another embodiment the input panel comprises at least one switchable glass unit. By the switchable glass unit, sometimes also referred to as "smart glass", areas can be defined the translucence of which can be changed. These areas can be provided with symbols representing a certain vehicle related function. When touching the switchable glass unit in a particular area, the associated function is triggered. At the same time the translucence can be changed. As mentioned, one function may be to switch on and off the reading lamps. When switched on, the button may be illuminated with a higher brightness, thereby informing the passenger which function is active.

In another embodiment the switchable glass unit comprises
- a top layer made of safety glass,
- a first layer of switchable glass, and
- a second layer of switchable glass, which are bonded to each other to form a composite panel.

The top layer is the layer that is directed to the exterior of the input device and thus exposed to external influences like temperature and mechanical impacts. Moreover, the passenger touches the input device at the top layer for triggering the desired functions. As the top layer is made of safety glass, the switchable glass unit is well protected. The symbols representing the associated function of the button may be printed on the first layer or on the second layer or represented by a foil arranged between the first layer and the second layer of switchable glass.

In another embodiment the decoupling unit comprises a spring element. A spring element is a relatively simple component that fulfils the decoupling in an efficient way. At this point it should be noted that one may subdivide the components of the input device whether they are taking part in the vibrations or not. While the housing, the printed circuit board and the light source are not taking part in the vibrations, the input panel, the reflector, the light guide and the decoupling unit are.

A further embodiment requires that the input device is arranged in the overhead console, the center console, the instrument panel (sometimes also referred to as dashboard) and/or the armrest of a vehicle. The overhead console, the center console, the instrument panel and the armrest are typical locations where buttons for triggering certain vehicle related functions are found. However, the input device may also be arranged in other locations of the passenger compartment of the vehicle. The vehicle passengers are thus used to find the buttons in these locations so that this arrangement considers the intuition of the vehicle passengers and increases the acceptance of the input device.

Another aspect of the invention is directed towards a vehicle, comprising an input device according to one of the embodiments previously presented.

The technical effects and advantages as discussed about the present input device mostly apply to the vehicle, too. Briefly, the vehicle can be provided with an input device that can be illuminated and concomitantly provides haptic feedback. The input device of the present invention takes up only a small constructional space and can be flexibly adjusted to different configurations of the vehicle.

### PREFERRED EMBODIMENTS OF THE INVENTION

The present invention is described in detail with reference to the drawings attached wherein
- Figure 1A: is an exploded view of a first embodiment of an input device according to the present invention,
- Figure 1B: is a cross-sectional view through the input device shown in Figure 1A in the mounted state,
- Figure 2A: is a cross-sectional view through a second embodiment of the input device in analogy to Figure 1B,
- Figure 2B: is an enlarged and simplified view of the section A defined in Figure 2A,
- Figure 2C: is an exploded view of the switchable glass unit shown in Figures 2A and 2B, and
- Figure 2D: is a top view on a switchable glass unit, and
- Figure 3: is a principle top view of a vehicle being equipped with a plurality of input devices according to the present invention.

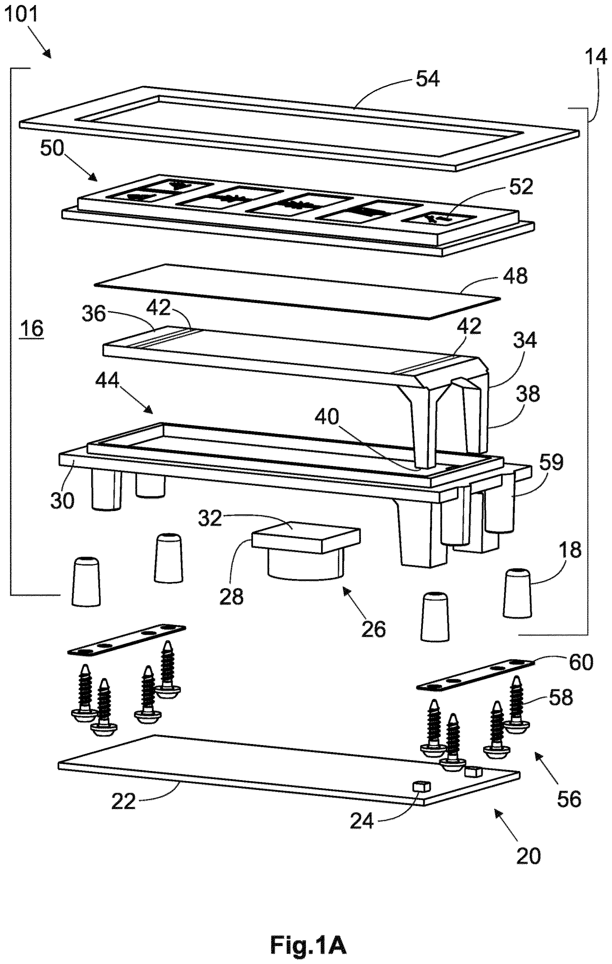

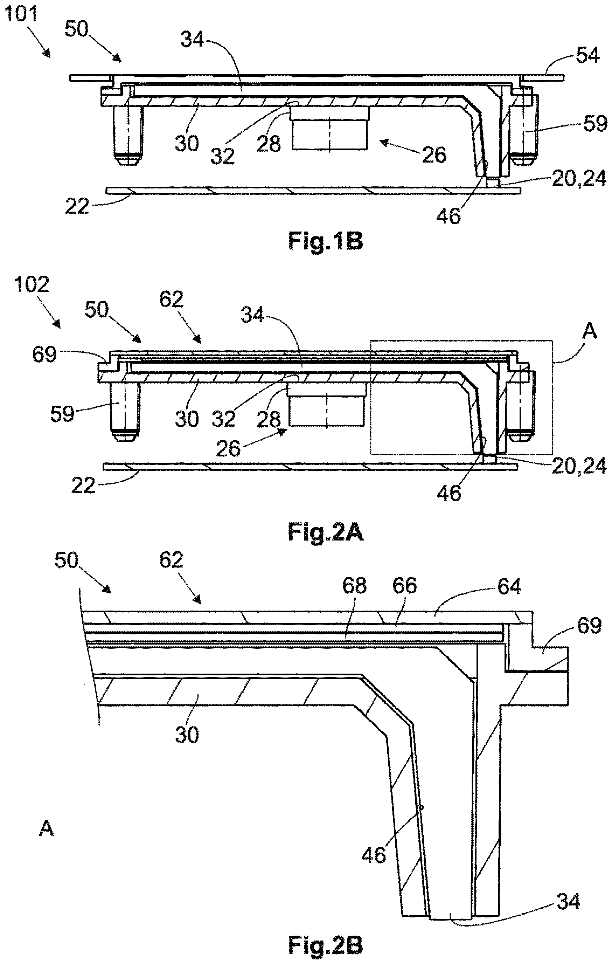

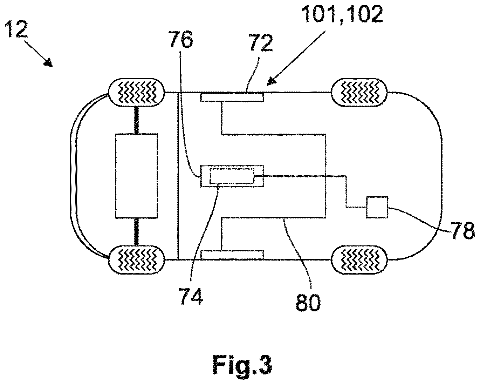

Figure 1A and 1B show a first embodiment of an input device 101 according to the present invention that can be used in a vehicle 12 (see Figure 3). As will be explained later in greater detail, vehicle related functions can be triggered by the input device 101. The input device 101 comprises a housing 14 that in Figure 1A is represented in a simplified way for the sake of clarity. The housing 14 encloses a cavity 16 and forms in total four screw bosses 18 the function of which will also be explained later. A light source 20 is fastened to the housing 14 in a way not explicitly shown. However, fastening means like screws may be used for this purpose. The light source 20 comprises a printed circuit board 22 on which two light-emitting diodes (LEDs) 24 are arranged.

The input device 101 is equipped with a vibration generating unit 26 which includes an exciter 28 by which vibrations or impulses can be generated. As evident from Figure 1B, the exciter 28 is connected to a reflector 30 which distributes the vibrations throughout the input device 101. The connection between the exciter 28 and the reflector 30 is realized in a contact section 32.

With reference in particular to Figure 1A, a light guide 34 is provided that can be fastened to the reflector 30. The light guide 34 has a first section 36 and a second section 38 that are arranged perpendicular to each other so that the light guide 34 has an L-formation. The second section 38 is forming two inserting units 40 in which the light emitted by the two LEDs 24 can be coupled into the light guide 34. A plurality of exiting units 42 is provided on the first section 36 where the light can leave the light guide 34. For the sake of clarity only some of the exiting units 42 are shown in a simplified way. The exiting units 42 may be embodied as scratches or recesses located on the surface of the first section 36. Other surface modifications may also be used.

For fastening the light guide 34 to the reflector 30, the reflector 30 is provided with a support section 44 into which the first section 36 of the light guide 34 can be introduced. As evident from Figure 1B, the reflector 30 forms a passage opening 46 through which the second section 38 of the light guide 34 can be guided. Figure 1B also shows that in the mounted state the inserting units 40 are placed adjacent to the two LEDs 24.

A touch foil 48 (Figure 1A) is applied to the first section 36 of the light guide 34. Beyond that, an input panel 50 is arranged adjacent to the light guide 34 and the touch foil 48 and fastened to the reflector 30. The light guide 34 is sandwiched between the input panel 50 and the reflector 30. The input panel 50 is provided with button-like sections 52 which can be pressed by a passenger of a vehicle 12. The button-like sections 52 are provided with symbols that are associated with a vehicle related function that is triggered when the respective button-like section 52 is pressed.

A bezel 54 is fastened to the housing 14 and positioned above the input panel 50. A small gap (see Figure 1B) is formed between the bezel 54 and the input panel 50 such that the vibrations of the input panel 50 are not transmitted to the bezel 54.

The input device 101 is further equipped with a decoupling unit 56. The decoupling unit 56 comprises in total eight screws 58 and two spring elements 60 that are embodied like leaf springs. The screws 58 introduced into the screw bosses 18 connect the spring elements with the housing 14 while the remaining screws 58 connect the spring elements with the reflector 30 which is equipped with screw protrusions 59 similarly formed to the screw bosses 18. The decoupling unit 56 separates the housing 14 from the reflector 30 and the parts fastened to the reflector 30, i.e., the light guide 34, the touch foil 48, the input panel 50 and the vibration generating unit 26.

As particularly evident from Figure 1B, the contact section 32 in which the exciter 28 contacts the light guide 34 is centrally arranged within the input device 101. The same is true for the exciter 28 itself. This arrangement leads to a very homogeneous distribution of the vibrations within the input device 101.

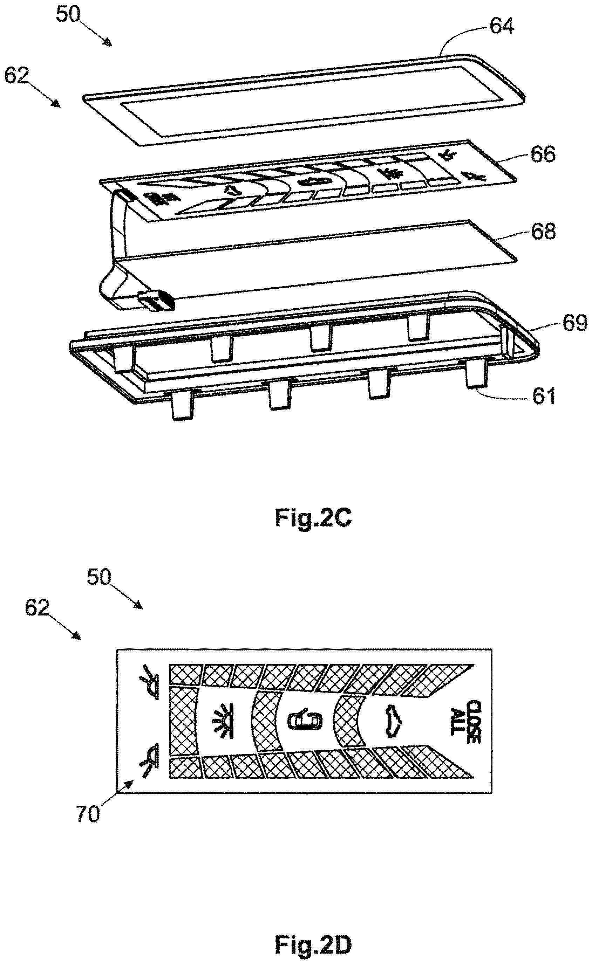

Figure 2A is a cross-sectional view through a second embodiment of the input device 102 similar to the cross-sectional view of Figure 1B. The input device 102 of the second embodiment is largely similar to the input device 101 of the first embodiment. However, the input panel 50 of the input device 102 of the second embodiment comprises a switchable glass unit 62, an exploded view of which is shown in Figure 2C. The switchable glass unit 62 is formed by a top layer 64 made of safety glass, a first layer 66 of switchable glass and a second layer 68 of switchable glass.

As in particular visible in Figures 2B and 2C, a frame 69 is provided that is connected to the top layer 64 of safety glass. The frame 69 is connected to the reflector 30 by means of connecting protrusions 61. A small gap between the second layer 68 of the switchable glass and the light guide 34 is formed (see in particular Figure 2B). Vibrations are introduced into the switchable glass unit 62 via the top layer 64 of safety glass only and not via the second layer 68 of the switchable glass.

It should be noted that the screw protrusion 59 of the reflector 30 is not shown in Figure 2B for the sake of clarity.

Figure 2D shows that by means of the switchable glass unit 62, areas of higher brightness and lower brightness can be defined. The areas of lower brightness are indicated by hatching. Button-like areas 70 can be provided with symbols that represent a certain vehicle 12 associated function when an end-user touches the button-like areas 70. A décor foil on which the symbols are printed may be arranged between the first layer 66 and the second layer 68 of switchable glass (not shown). In the shown switchable glass unit 62, the symbols are painted on the first layer 66. Instead of or in addition to the symbols, design elements can be provided (not shown) which are not necessarily associated with a certain function.

Moreover, in particular the areas of lower brightness may be animated such that the brightness can be changed according to a certain scene. This scene may be in line or synchronized with the scenes provided by the ambient interior lighting.

The brightness may be changed thereby indicating which function is triggered. When the passenger is touching the top layer 64 inside a particular button-like area 70 to activate the desired function, the vibration generated by the exciter 28 is transferred into the switchable glass unit 62 and in particular into the top layer 64 of safety glass such that the vibration is conceivable by the passenger.

The input device 101, 102 of the first embodiment and the second embodiment may be operated as follows. When the passenger of a vehicle 12 that is equipped with such an input device 101 wants to trigger a certain vehicle related function, he touches the input panel 50 either at the button-like section 52 (Figure 1A) or at the button-like area 70 (Figure 2D) that is associated with the function and exerts a certain pressure on the input panel 50. This pressure is transmitted to the touch foil 48 which creates a certain current in the button-like section 52 or the button-like area 70, respectively. This current is used to trigger the associated function and to activate the exciter 28. The passenger gets immediate haptic feedback when the function has been successfully triggered. When no haptic feedback is provided, the passenger knows that his attempt to trigger the function was not successful and he may have to try again.

Figure 3 is a principle top view on a vehicle 12 that is provided with input devices 101, 102 for example according to one of the embodiments previously presented. The input devices 101, 102 may be arranged in an armrest 72, a center console 74 and/or in the overhead console 76 of the vehicle 12. An arrangement in other locations inside the passenger compartment of the vehicle 12 is also possible. The input devices 101, 102 are connected to a control unit 78 by electrical wires 80. As mentioned, a current is produced when the passenger presses the input device 101, 102 to trigger a certain vehicle related function. This current is transmitted to the control unit 78 which then procures the execution of the respective function.

### REFERENCE LIST

- 101, 102: input device
- 12: vehicle
- 14: housing
- 16: cavity
- 18: screw boss
- 20: light source
- 22: printed circuit board
- 24: light-emitting diodes
- 26: vibration-generating unit
- 28: exciter
- 30: reflector
- 32: contact section
- 34: light guide
- 36: first section
- 38: second section
- 40: inserting unit
- 42: exiting unit
- 44: support section
- 46: passage opening
- 48: touch foil
- 50: input panel
- 52: button-like section
- 54: bezel
- 56: decoupling unit
- 58: screw
- 59: screw protrusion
- 60: spring element
- 61: connecting protrusion
- 62: switchable glass unit
- 64: top layer
- 66: first layer
- 68: second layer
- 69: frame
- 70: button-like area
- 72: armrest
- 74: center console
- 76: overhead console
- 78: control unit
- 80: electrical wires

## Claims

1. Input device (101, 102) of or for a vehicle (12) for inputting commands for triggering vehicle related functions, comprising
- a housing (14) enclosing a cavity (16),
- a vibration generating unit (26) arranged in the cavity (16), the vibration generating unit (26) comprising an exciter (28) for generating vibrations or impulses,
- a decoupling unit (56) by which the vibration generating unit (26) is fastened to the housing (14), the decoupling unit (56) being designed for decoupling the vibrations from the housing (14),
- an input panel (50) for inputting commands for triggering vehicle related functions by touching the input panel (50), wherein
∘ the vibration generating unit (26) is activated upon touching the input panel (50),
∘ the input panel (50) is supported in the input device (101, 102) such that the vibrations generated by the vibration generating unit (26) are transferred to the input panel (50), thereby providing haptic feedback, and
- at least one light guide (34) arranged in the cavity (16) for guiding light generated by a light source (20) to the input panel (50) for illuminating the same.

2. Input device (101, 102) according to claim 1,
**characterized in that** the light source (20) is fastened to the housing (14).

3. Input device (101, 102) according to claim 2,
**characterized in that** the input device (101, 102) comprises a printed circuit board (22) on which the light source (20) is arranged, the printed circuit board (22) being fastened to the housing (14).

4. Input device (101, 102) according to claim 3,
**characterized in that** the light guide (34) comprises one or more inserting units (40) for coupling light into the light guide (34), and the light source (20) comprises one or more light-emitting diodes (24) adjacently arranged to the inserting units (40) and arranged on the printed circuit board (22).

5. Input device (101, 102) according to one of the preceding claims, **characterized in that** the light guide (34) has a first section (36) and a second section (38),
- the first section (36) running parallel to the input panel (50) or following the shape of the input panel (50) and
- the second section (38) running perpendicular to the first section (36), wherein
- a number of exiting units (42) are arranged on the first section (36) in which the light can exit the light guide (34).

6. Input device (101, 102) according to claims 4 and 5,
**characterized in that** the first section (36) and the second section (38) are arranged in an L-formation, wherein the inserting units (40) are located on the free end of the second section (38).

7. Input device (101, 102) according to one of the preceding claims,
**characterized in that** the input device (101, 102) comprises a reflector (30) for distributing the vibrations generated by the exciter (28) within the input device (101, 102).

8. Input device (101, 102) according to claim 7,
**characterized in that** the reflector (30) comprises a contact section (32) in which the reflector (30) is contacting the exciter (28), wherein the exciter (28) and the contact section (32) are arranged in or near the center of the input device (101, 102).

9. Input device (101, 102) according to one of the claims 7 or 8, **characterized in that** the reflector (30) has a support section (44) for receiving the light guide (34).

10. Input device (101, 102) according to claim 9,
**characterized in that** the support section (44) of the reflector (30) is configured for receiving the first section (36), wherein the reflector (30) has a passage opening (46) for the second section (38).

11. Input device (101, 102) according to one of the preceding claims, **characterized in that** the input panel (50) comprises at least one switchable glass unit (62).

12. Input device (101, 102) according to 11,
**characterized in that** the switchable glass unit (62) comprises
- a top layer (64) made of safety glass,
- a first layer (66) of switchable glass, and
- a second layer (68) of switchable glass, which are bonded to each other to form a composite panel.

13. Input device (101, 102) according to one of the preceding claims, **characterized in that** the decoupling unit (56) comprises a spring element (60).

14. Input device (101, 102) according to one of the preceding claims, **characterized in that** the input device (101, 102) is arranged in the overhead console (76), the center console (74), the instrument panel and/or the armrest (72) of a vehicle (12).

15. Vehicle (12), comprising an input device (101, 102) according to one of the preceding claims.
